(19) **Europäisches Patentamt**
**European Patent Office**
**Office européen des brevets**

(11) **EP 3 091 694 B1**

(12) **EUROPEAN PATENT SPECIFICATION**

(45) Date of publication and mention
of the grant of the patent:
**03.06.2020 Bulletin 2020/23**

(51) Int Cl.:
***A47J 36/32*** *(2006.01)* ***H04L 12/28*** *(2006.01)*

(21) Application number: **16165504.8**

(22) Date of filing: **15.04.2016**

(54) **METHOD AND DEVICE FOR STARTING RICE COOKER**

VERFAHREN UND VORRICHTUNG ZUM STARTEN EINES REISKOCHERS

PROCÉDÉ ET DISPOSITIF POUR DÉMARRER UN CUISEUR À RIZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.05.2015 CN 201510221433**

(43) Date of publication of application:
**09.11.2016 Bulletin 2016/45**

(73) Proprietor: **Xiaomi Inc.**
**Beijing 100085 (CN)**

(72) Inventors:
• **WU, Ke**
**100085 Haidian District (CN)**

• **LIU, Xinyu**
**100085 Haidian District (CN)**

(74) Representative: **Loustalan, Paul William**
**Reddie & Grose LLP**
**The White Chapel Building**
**10 Whitechapel High Street**
**London E1 8QS (GB)**

(56) References cited:
**EP-A1- 2 540 199 JP-A- 2005 342 075
KR-B1- 101 400 108**

## Description

## TECHNICAL FIELD

The present disclosure relates to the field of smart home, and more particularly, to a method and a device for starting a rice cooker.

## BACKGROUND

A rice cooker (usually an electric rice cooker) is one kind of indispensable kitchen household appliance in a modern home life. With the continuous development of intelligent household appliances, currently launched rice cookers also provide multiple functions, such as timing, cooking, heat insulation, and a menu for selection.

When using the rice cooker to cook rice or congee, a user needs only to put rice and water in an appropriate proportion in the rice cooker, and press a mechanical or virtual switch on an operation panel thereof to start a cooking function of the rice cooker; alternatively, the user can also select an appointment cooking function on the operation panel of the rice cooker, and set a time for starting the cooking function according to prompts, for example, set the rice cooker to start cooking at 6:00 am, or start cooking after five hours, which causes the rice cooker to start the cooking function when the time set by the user arrives.

KR 101 400 108 B1, JP 2005 342075 A, and EP 2 540 199 A1 all disclose rice cooker which enable the user to automatically cook rice in a desired manner, and that control aspects of the cooking such as the amount of water used as compared to the amount of rice provided in the cooker. In addition, all of the rice cookers are provided with a time controller which enables the user to delay the start of cooking until a predetermined time.

## SUMMARY

The present disclosure provides a method and a device for starting a rice cooker. The technical solutions are as follows:

According to a first aspect of embodiments of the present disclosure, there is provided a method for starting a rice cooker, including:

    detecting whether rice and water in the rice cooker meet a cooking condition;
    if the rice and the water in the rice cooker meet the cooking condition, detecting whether a specified user operation is received; and
    if a detection result is that the specified user operation is not received, starting a cooking function of the rice cooker.

Detecting whether rice and water in the rice cooker meet the cooking condition includes:

detecting whether there is weight in the rice cooker via a pressure sensor provided on a bottom of a pan of the rice cooker;
    if there is weight in the rice cooker, acquiring a total mass of the weight;
    heating an inner pot of the rice cooker for a predetermined length of time;
    acquiring a temperature variation value in the inner pot of the rice cooker between before and after heating;
    determining a ratio of the rice and the water in the rice cooker according to the temperature variation value and the total mass; and
    detecting whether the rice and the water in the rice cooker meet the cooking condition according to the ratio of the rice and the water.

Optionally, before starting the cooking function of the rice cooker, the method further includes: detecting whether an automatic starting condition is satisfied, wherein the automatic starting condition includes at least one of the following conditions:

    it is decided that a user has entered into a sleep state according to physiological parameters of the user detected by a wearable device;
    it is decided that there is no user activity in a room according to monitoring data of a security device in a smart home; and
    it is detected that a time that the rice and the water in the rice cooker meet the cooking condition is in a first time interval, and each lighting device in the smart home is in a closed state.

Optionally, before starting the cooking function of the rice cooker, the method further includes:

    determining a starting time for starting the cooking function of the rice cooker;
    the starting a cooking function of the rice cooker includes:
    when the starting time arrives, starting the cooking function of the rice cooker.

Optionally, the determining the starting time for starting the cooking function of the rice cooker includes:

    if it is detected that a time that the rice and the water in the rice cooker meet the cooking condition is in a second time interval, acquiring an alarm time set in an alarm device, and determining a starting time according to the alarm time;
    if it is detected that a time that the rice and the water in the rice cooker meet the cooking condition is in a third time interval, acquiring route information between a specified smart device and the rice cooker and road condition information corresponding to the route information, calculating an arrival time of the specified smart device according to the route information and the road condition information, and determining the starting time according to the arrival time;

determining a time when the user manually started the cooking function of the rice cooker last time as the starting time; or

using a starting time which is automatically determined last time as the starting time.

Optionally, the method further includes:

before starting the cooking function of the rice cooker, displaying prompt information to prompt whether an operation of starting the cooking function of the rice cooker is cancelled; and

if an instruction for cancelling the operation of starting the cooking function of the rice cooker is not received within a second predetermined period of time, performing the operation of starting the cooking function of the rice cooker.

Optionally, the displaying prompt information includes:

when it is detected that there is no user activity in a room, pushing the prompt information to a mobile terminal;

when it is detected that there is user activity in the room, pushing the prompt information to a smart television; or

when it is detected that there is user activity in the room, emitting a sound-light prompt via the rice cooker.

According to a second aspect of embodiments of the present disclosure, there is provided a device for starting a rice cooker, including:

a first detection module configured to detect whether rice and water in the rice cooker meet a cooking condition;

a second detection module configured to, if the rice and the water in the rice cooker meet the cooking condition, detect whether a specified user operation is received; and

a starting module configured to, if a detection result detected by the second detection module is that the specified user operation is not received, start a cooking function of the rice cooker.

The first detection module includes:

a weight detection submodule configured to detect whether there is weight in the rice cooker via a pressure sensor provided on a bottom of a pan of the rice cooker;

a mass acquisition submodule configured to, if there is weight in the rice cooker, acquire a total mass of the weight;

a heating submodule configured to heat an inner pot of the rice cooker for a predetermined length of time;

a temperature variation acquisition submodule configured to acquire a temperature variation value in the inner pot of the rice cooker between before and after heating;

a ratio determination submodule configured to determine a ratio of the rice and the water in the rice cooker according to the temperature variation value and the total mass; and

a condition detection submodule configured to detect whether the rice and the water in the rice cooker meet the cooking condition according to the ratio of the rice and the water.

Optionally, the device further includes:
a third detection module configured to detect whether an automatic starting condition is satisfied before the starting module starts the cooking function of the rice cooker, wherein the automatic starting condition includes at least one of the following conditions:

it is decided that a user has entered into a sleep state according to physiological parameters of the user detected by a wearable device;

it is decided that there is no user activity in a room according to monitoring data of a security device in a smart home; and

it is detected that a time that the rice and the water in the rice cooker meet the cooking condition is in a first time interval, and each lighting device in the smart home is in a closed state.

Optionally, the device further includes:

a starting time determination module configured to determine a starting time for starting the cooking function of the rice cooker before the starting module starts the cooking function of the rice cooker;

wherein the starting module starts the cooking function of the rice cooker when the starting time arrives.

Optionally, the starting time determination module includes: an alarm time acquisition submodule and a first time determination submodule; or the starting time determination module includes: an information acquisition submodule, a time calculation submodule and a second time determination submodule; or the starting time determination module includes: a third time determination submodule; or the starting time determination module includes: a fourth time determination submodule; wherein

the alarm time acquisition submodule is configured to, if it is detected that a time that the rice and the water in the rice cooker meet the cooking condition is in a second time interval, acquire an alarm time set in an alarm device;

the first time determination submodule is configured to determine a starting time according to the alarm time;

the information acquisition submodule is configured to, if it is detected that a time that the rice and the water in the rice cooker meet the cooking condition is in a third time interval, acquire route information between a specified smart device and the rice cooker and road condition information corresponding to the route information;

the time calculation submodule is configured to calculate an arrival time of the specified smart device according to the route information and the road condition information;

the second time determination submodule is configured to determine the starting time according to the arrival time;

the third time determination submodule is configured to determine a time when the user manually started the cooking function of the rice cooker last time as the starting time; and

the fourth time determination submodule is configured to use a starting time which is automatically determined last time as the starting time.

Optionally, the device further includes:

an information prompt module configured to display prompt information before the starting module starts the cooking function of the rice cooker, wherein the prompt information is used to prompt whether an operation of starting the cooking function of the rice cooker is cancelled;

wherein the starting module is configured to, if an instruction for cancelling the operation of starting the cooking function of the rice cooker is not received within a second predetermined period of time, perform the operation of starting the cooking function of the rice cooker.

Optionally, the information prompt module includes:

a first push submodule configured to, when it is detected that there is no user activity in a room, push the prompt information to a mobile terminal;

a second push submodule configured to, when it is detected that there is user activity in the room, push the prompt information to a smart television; and

a prompt submodule configured to, when it is detected that there is user activity in the room, emit a sound-light prompt via the rice cooker.

According to a third aspect of embodiments of the present disclosure, there is provided a computer program, which when executing on a processor of a device, performs a method according to any one of the above methods according to a first aspect of embodiments of the present disclosure.

The technical solutions provided by the embodiments of the present disclosure may include the following advantageous effects:

In the present disclosure, whether the rice and the water in the rice cooker meet the cooking condition is detected, and if the rice and the water in the rice cooker meet the cooking condition, then it is detected whether a specified user operation is received, and if the specified user operation is not received, the cooking function of the rice cooker is started. By doing so, that is, when it is detected that the rice and the water in the rice cooker have been ready and a specified operation of the user is not received, the cooking function is started automatically, the problem of failing to cook due to that the user forgot to make a cooking operation or an appointment operation manually is avoided, and user experience is improved.

It is to be understood that both the foregoing general description and the following detailed description are exemplary and explanatory only and are not restrictive of the invention.

**BRIEF DESCRIPTION OF THE DRAWINGS**

The accompanying drawings, which are incorporated in and constitute a part of this specification, illustrate embodiments consistent with the invention, and together with the description, serve to explain the principles of the invention.

Fig. 1 is a schematic diagram illustrating an implementation environment that a method for starting a rice cooker involves, according to a part of exemplary embodiment.

Fig. 2 is a flow chart illustrating a method for starting a rice cooker, according to an exemplary embodiment.

Fig. 3 is a flow chart illustrating a method for starting a rice cooker, according to another exemplary embodiment.

Fig. 4 is a flow chart illustrating a method for starting a rice cooker, according to further another exemplary embodiment.

Fig. 5 is a block diagram illustrating a device for starting a rice cooker, according to an exemplary embodiment.

Fig. 6 is a block diagram illustrating a device for starting a rice cooker, according to another exemplary embodiment.

Fig. 7 is a block diagram illustrating a device according to an exemplary embodiment.

**DETAILED DESCRIPTION**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

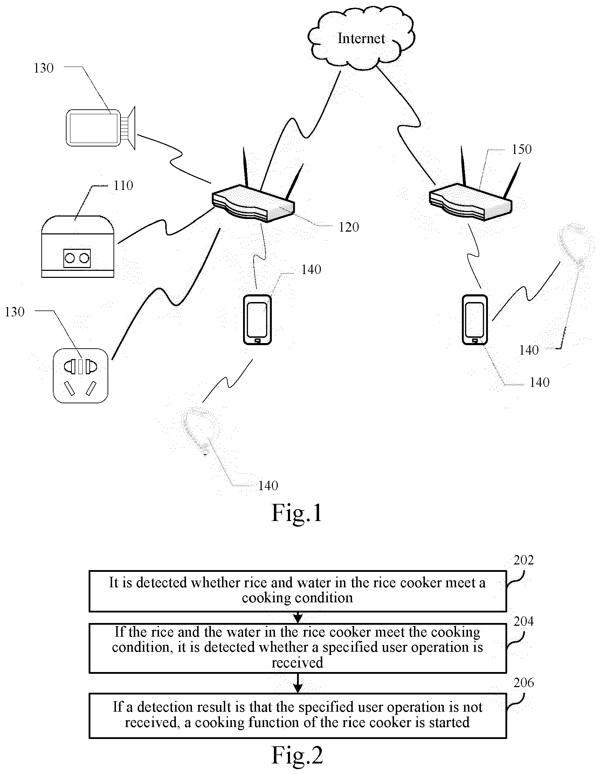

Fig. 1 is a schematic diagram illustrating an implementation environment that a method for starting a rice cooker involves, according to some of exemplary embodiments. The implementation environment includes: a rice cooker 110, a first smart router 120, at least one smart household appliance 130 and at least one mobile terminal 140.

The smart household appliance 130 may include: a smart television, a lighting device, a security device, a smart air conditioner, a smart refrigerator and a smart socket, and the like.

The mobile terminal 140 may be a smart mobile phone, a tablet, an ebook reader, a smart band, a smart watch and smart glasses, and the like.

The rice cooker 110, at least one smart household appliance 130 and at least one mobile terminal 140 are connected to a home smart network via the first smart router 120, where the rice cooker 110 and at least one smart household appliance 130 are connected with the first smart router 120 using a short distance wireless communication mode, while the at least one mobile terminal 140 may be connected with the first smart router 120 using the short distance wireless communication mode or via an operator network.

In addition, the implementation environment may further include: a second smart router 150.

The first smart router 120 is connected to the second smart router 150 through internet; the second smart router 150 can also be connected to the smart household appliance and the mobile terminal.

Fig. 2 is a flow chart illustrating a method for starting a rice cooker, according to an exemplary embodiment. The method for starting the rice cooker is applicable in the rice cooker 110 shown in Fig. 1. As shown in Fig. 2, the method for starting the rice cooker may include the following steps.

In step 202, it is detected whether rice and water in the rice cooker meet a cooking condition.

In step 204, if the rice and the water in the rice cooker meet the cooking condition, it is detected whether a specified user operation is received.

In step 206, if a detection result is that the specified user operation is not received, a cooking function of the rice cooker is started.

Detecting whether rice and water in the rice cooker meet the cooking condition includes:

detecting whether there weight in the rice cooker via a pressure sensor provided on a bottom of a pan of the rice cooker;
if there is weight in the rice cooker, acquiring a total mass of the weight;
heating an inner pot of the rice cooker for a predetermined length of time;
acquiring a temperature variation value in the inner pot of the rice cooker between before and after heating;
determining a ratio of the rice and the water in the rice cooker according to the temperature variation value and the total mass; and
detecting whether the rice and the water in the rice cooker meet the cooking condition according to the ratio of the rice and the water.

Optionally, before starting the cooking function of the rice cooker, the method further includes:
detecting whether an automatic starting condition is satisfied, where the automatic starting condition includes at least one of the following conditions:

after detecting that the rice and the water in the rice cooker meet the cooking condition, the rice cooker does not receive a specified operation within a first predetermined period of time;
it is decided that a user has entered into a sleep state according to physiological parameters of the user detected by a wearable device;
it is decided that there is no user activity in a room according to monitoring data of a security device in a smart home; and
it is detected that a time that the rice and the water in the rice cooker meet the cooking condition is in a first time interval, and each lighting device in the smart home is in a closed state.

Optionally, wherein before starting the cooking function of the rice cooker, the method further includes:

determining a starting time for starting the cooking function of the rice cooker;
the starting a cooking function of the rice cooker includes:
when the starting time arrives, starting the cooking function of the rice cooker.

Optionally, the determining the starting time for starting the cooking function of the rice cooker includes:

if it is detected that a time that the rice and the water in the rice cooker meet the cooking condition is in a second time interval, acquiring an alarm time set in an alarm device, and determining a starting time according to the alarm time;
if it is detected that a time that the rice and the water in the rice cooker meet the cooking condition is in a third time interval, acquiring route information between a specified smart device and the rice cooker and road condition information corresponding to the route information, calculating an arrival time of the specified smart device according to the route information and the road condition information, and determining the starting time according to the arrival time;

determining a time when the user manually started the cooking function of the rice cooker last time as the starting time; or

using a starting time which is automatically determined last time as the starting time.

Optionally, the method further includes:

before starting the cooking function of the rice cooker, displaying prompt information to prompt whether an operation of starting the cooking function of the rice cooker is cancelled; and

if an instruction for cancelling the operation of starting the cooking function of the rice cooker is not received within a second predetermined period of time, performing the operation of starting the cooking function of the rice cooker.

Optionally, the displaying prompt information includes:

when it is detected that there is no user activity in a room, pushing the prompt information to a mobile terminal;

when it is detected that there is user activity in the room, pushing the prompt information to a smart television; or

when it is detected that there is user activity in the room, emitting a sound-light prompt via the rice cooker.

In summary, in the method for starting a rice cooker provided by the embodiments of the present disclosure, whether the rice and the water in the rice cooker meet the cooking condition is detected, and if the rice and the water in the rice cooker meet the cooking condition, then it is detected whether a specified user operation is received, and if the specified user operation is not received, the cooking function of the rice cooker is started. By doing so, that is, when it is detected that the rice and the water in the rice cooker have been ready and a specified operation of the user is not received, the cooking function is started automatically, the problem of failing to cook due to that the user forgot to make a cooking operation or an appointment operation manually is avoided, and user experience is improved.

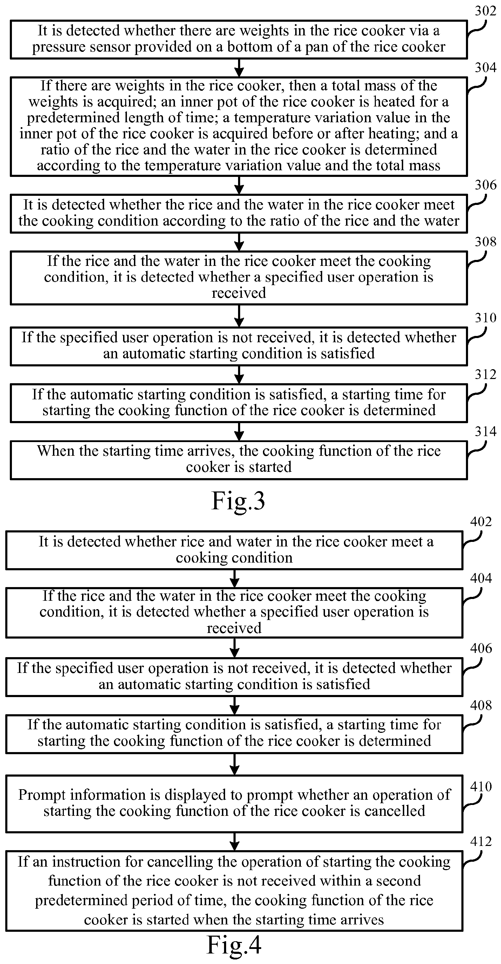

Fig. 3 is a flow chart illustrating a method for starting a rice cooker, according to another exemplary embodiment. The method for starting the rice cooker is applicable in the rice cooker 110 shown in Fig. 1. As shown in Fig. 3, the method for starting the rice cooker may include the following steps.

In step 302, it is detected whether there weight in the rice cooker via a pressure sensor provided on a bottom of a pan of the rice cooker.

In embodiments of the present disclosure, the pressure sensor may be provided on the bottom of the pan of the rice cooker, and pressure parameters of the bottom of the pan may be collected by the pressure sensor. If the pressure parameter is larger than a preset parameter threshold, it may be decided that there is weight in the rice cooker.

In step 304, if there are weights in the rice cooker, then a total mass of the weight is acquired; an inner pot of the rice cooker is heated for a predetermined length of time; a temperature variation value in the inner pot of the rice cooker is acquired between the temperature before and after heating; and a ratio of the rice and the water in the rice cooker is determined according to the temperature variation value and the total mass.

Specific heat capacity of the rice is different from that of the water, that is, for rice and water with the same mass, thermal energy required for rising the same temperature is different. The specific heat capacity $C1$ of the rice is about 2000J $(Kg·□)^{-1}$, the specific heat capacity $C2$ of the water is about 4200J $(Kg·°C)^{-1}$, that is, one kilogram of rice needs to absorb only 2000 Joules of thermal energy when the temperature rises 1°C, and one kilogram of water needs to absorb only 4200 Joules of thermal energy when the temperature rises 1°C. When the rice and the water are heated together, the increased temperature of both is the same. Thereby, in the case that the specific heat capacity of the rice and the water and the total mass of the rice and the water do not vary, the ratio of the rice and the water may be calculated according to the following formulas. It should be noted that the ratio of the rice and the water here is a mass ratio of the rice and the water:

$$\begin{cases} P * \Delta t * \alpha = C_1 * m_1 + C_2 * m_2 \\ M = m_1 + m_2 \end{cases};$$

where P is a power for heating the rice cooker, $\Delta t$ is a time for heating, $\alpha$ is a thermal efficiency of the rice cooker, M is a total mass of the rice and the water, $m_1$ and $m_2$ are mass of the rice and the water respectively. Thus it can be seen that, elements except $m_1$ and $m_2$ are known in the above formulas, $m_1$ and $m_2$ may be calculated via the above equations, and then the mass ratio of the rice and the water may be obtained.

In step 306, it is detected whether the rice and the water in the rice cooker meet the cooking condition according to the ratio of the rice and the water.

After the mass ratio of the rice and the water is obtained, the rice cooker can detect whether the mass ratio is in a predetermined proportional range. If the mass ratio is in the predetermined proportional range, it may be determined that the rice and the water in the rice cooker already meet the cooking condition.

In step 308, if the rice and the water in the rice cooker meet the cooking condition, it is detected whether a specified user operation is received.

The specified user operation may be an operation of starting the cooking function or an operation for making an appointment to start cooking at a specified time point. If a cooking operation or an appointment operation is not received within a period of time after the rice cooker detects that the rice and the water meet the cooking condition, it may be because the user forgot to make the cooking operation or the appointment operation.

In step 310, if the specified user operation is not received, it is detected whether an automatic starting condition is satisfied.

The rice cooker can detect whether at least one of the following automatic starting conditions is satisfied.

1) It is decided that a user has entered into a sleep state according to physiological parameters of the user detected by a wearable device.

The wearable device of the user can collect the physiological parameters of the user, and decide whether the user enters into the sleep state based on the physiological parameters. After detecting that the rice and the water already meet the cooking condition, the rice cooker can inquire whether the user enters into the sleep state from the wearable device via a smart home network. If the user does not enter into the sleep state, the rice cooker waits the user to make the cooking operation or the appointment operation; and if the user has entered into the sleep state, the rice cooker determines that the user forgot to make the cooking operation or the appointment operation, and the automatic starting condition is satisfied.

2) It is decided that there is no user activity in a room according to monitoring data of a security device in a smart home.

The security device in the smart home can monitor user activities and behaviors in the room via a detection device, such as a camera or an infrared alarm buzzer. After detecting that the rice and the water already meet the cooking condition, the rice cooker can inquire whether there is user activity in the room from the security device via the smart home network. If there is user activity, the rice cooker waits the user to make the cooking operation or the appointment operation; and if there is no user activity, the rice cooker determines that the user forgot to make the cooking operation or the appointment operation, and the automatic starting condition is satisfied.

3) It is detected that a time that the rice and the water in the rice cooker meet the cooking condition is in a first time interval, and each lighting device in the smart home is in a closed state.

For example, when the rice cooker detects that the time that the rice and the water meet the cooking condition is between 6:00 pm to 12:00 pm, the rice cooker can inquire working state of each lighting device in the smart home from the smart router in the smart home. If each lighting device is in the closed state, the user may have been away or have fallen asleep, at this time, the rice cooker may determine that the user forgot to make the cooking operation or the appointment operation, and the automatic starting condition is satisfied.

In step 312, if the automatic starting condition is satisfied, a starting time for starting the cooking function of the rice cooker is determined.

Optionally, the starting time may be determined by the rice cooker through one of the following methods.

1) If it is detected that a time that the rice and the water in the rice cooker meet the cooking condition is in a second time interval, an alarm time set in an alarm device is acquired, and a starting time is determined according to the alarm time.

For example, if detecting that the time that the rice and the water meet the cooking condition is after 9:00 pm, the rice cooker assumes that the rice and the water may be prepared for breakfast next morning by the user. At this time, the rice cooker can acquire the alarm time set in the smart mobile phone of the user or an alarm clock, and determine the starting time according to the alarm time, for example, a time point of 20 minutes before the alarm time as the starting time.

2) If it is detected that a time that the rice and the water in the rice cooker meet the cooking condition is in a third time interval, route information between a specified smart device and the rice cooker and road condition information corresponding to the route information are acquired, an arrival time of the specified smart device is calculated according to the route information and the road condition information, and the starting time is determined according to the arrival time.

For example, if the rice cooker detects that the time that the rice and the water meet the cooking condition is in the daytime, the rice and the water may be prepared for lunch or dinner that day by the user; At this time, if the user is not in the room, the route information between the smart phone of the user and the rice cooker and road condition information corresponding to the route information may be acquired via the smart router, a time for the user to get home may be estimated in combination with a current time, and the starting time may be determined according to the time for the user to get home. For example, assume that the time for the user to get home is 6:00 pm, the rice cooker can set the starting time to 5:40 pm.

3) A time when the user manually started the cooking function of the rice cooker last time is determined as the starting time.

The rice cooker can also determine the time when the user manually started the cooking function of the rice cooker last time as the starting time. For example, the time when the user manually started the cooking function of the rice cooker this morning is 7:00 am, the rice cooker can set the starting time to 7:00 am next morning.

4) A starting time which is automatically determined last time is used as the starting time.

Alternatively, the rice cooker can also directly determine the starting time which is automatically determined because it is decided that the user forgot to cook rice last time as the starting time. For example, the time automatically determined by the rice cooker last time for starting the cooking function this morning is 6:40 am, the rice cooker can set the starting time as 6:40 am next morning.

In step 314, when the starting time arrives, the cooking function of the rice cooker is started.

Optionally, since the mass ratio of the rice and the water for cooking rice is different from that for cooking congee, in the embodiments of the present disclosure, before the cooking function is started, a cooking mode may also be decided through the mass ratio of the rice and the water obtained in step 304. The cooking mode may include cooking rice or congee. When the starting time arrives, the cooking function of the rice cooker is started according to the determined cooking mode.

In summary, in the method for starting a rice cooker provided by the embodiments of the present disclosure, whether the rice and the water in the rice cooker meet the cooking condition is detected, and if the rice and the water in the rice cooker meet the cooking condition, then it is detected whether a specified user operation is received, and if the specified user operation is not received, the cooking function of the rice cooker is started. By doing so, that is, when it is detected that the rice and the water in the rice cooker have been ready and a specified operation of the user is not received, the cooking function is started automatically, the problem of failing to cook due to that the user forgot to make a cooking operation or an appointment operation manually is avoided, and user experience is improved.

Furthermore, in the method for starting a rice cooker provided by the embodiments of the present disclosure, the cooking mode is decided according to the mass ratio of the rice and the water, and when the starting time arrives, the cooking function of the rice cooker is started according to the determined cooking mode, thereby, the user does not need to set or select manually, and user experience is further improved.

Fig. 4 is a flow chart illustrating a method for starting a rice cooker, according to further another exemplary embodiment. The method for starting the rice cooker is applicable in the rice cooker 110 shown in Fig. 1. As shown in Fig. 4, the method for starting the rice cooker may include the following steps.

In step 402, it is detected whether rice and water in the rice cooker meet a cooking condition.

In step 404, if the rice and the water in the rice cooker meet the cooking condition, it is detected whether a specified user operation is received.

In step 406, if the specified user operation is not received, it is detected whether an automatic starting condition is satisfied.

In step 408, if the automatic starting condition is satisfied, a starting time for starting the cooking function of the rice cooker is determined.

The description to the method for detecting if the rice and the water are in conformity with the cooking condition and the automatic starting condition is satisfied and determining the starting time by the rice cooker may refer to the description to steps 302-312 in corresponding embodiments, which is not elaborated herein.

In step 410, prompt information is displayed to prompt whether an operation of starting the cooking function of the rice cooker is cancelled.

When it is detected that there is no user activity in a room, the rice cooker can push the prompt information to a mobile terminal. For example, when it is detected that there is no user activity in the room via a security device in a smart home, the rice cooker can push the prompt information to the mobile terminal, such as a smart mobile phone, to prompt the user whether the starting is cancelled.

When it is detected that there is user activity in the room, the rice cooker can push the prompt information to a smart television. For example, when it is detected that there is user activity in the room via the security device in the smart home, the rice cooker can push the prompt information to the smart television to prompt the user whether the starting is cancelled. If the smart television is in an open state, the prompt information is directly displayed at a specified position on a screen of the smart television; and if the smart television is in a closed state, the smart television is controlled to open and the prompt information is displayed at the specified position on the screen of the smart television.

When it is detected that there is user activity in the room, the rice cooker can emit a sound-light prompt itself. For example, when it is detected that there is user activity in the room via the security device in the smart home, the rice cooker can emit a prompt, such as voice, buzz, and flashing lights, to remind the user that the rice cooker is ready to start the cooking function automatically.

When the prompt information is pushed to the mobile terminal or the smart television, the prompt information may include information, such as a starting time and a cooking mode.

In step 412, if an instruction for cancelling the operation of starting the cooking function of the rice cooker is not received within a second predetermined period of time, the cooking function of the rice cooker is started when the starting time arrives.

For example, after the prompt information is displayed, if the operation of cancelling the starting the cooking function by the user is not received within 10 minutes, or the operation of cancelling the starting the cooking function by the user is not received before the starting time arrives, the cooking function of the rice cooker is started when the starting time arrives.

If the instruction for cancelling the operation of starting the cooking function of the rice cooker is received within the second predetermined period of time, an appointment is cancelled. For example, after viewing the prompt information via the smart mobile phone or the smart television, the user selects a cancel button, the smart mobile phone or the smart television pushes a cancel instruction to the rice cooker, and this starting operation is cancelled by the rice cooker.

In summary, in the method for starting a rice cooker provided by the embodiments of the present disclosure, whether the rice and the water in the rice cooker meet the cooking condition is detected, and if the rice and the water in the rice cooker meet the cooking condition, then it is detected whether a specified user operation is received, and if the specified user operation is not received, the cooking function of the rice cooker is started. By doing so, that is, when it is detected that the rice and the water in the rice cooker have been ready and a specified operation of the user is not received, the cooking function is started automatically, the problem of failing to cook due to that the user forgot to make a cooking operation or an appointment operation manually is avoided, and user experience is improved.

In addition, in the method for starting a rice cooker provided by the embodiments of the present disclosure, before starting the cooking function of the rice cooker, the prompt information used to prompt whether the operation for starting the cooking function of the rice cooker is cancelled is displayed. If the instruction for cancelling the operation of starting the cooking function of the rice cooker is not received within the second predetermined period of time, the cooking function of the rice cooker is started when the starting time arrives, so as to facilitate the user to know a starting state of the rice cooker timely, thus avoiding an error detection.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

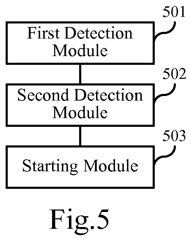

Fig. 5 is a block diagram illustrating a device for starting a rice cooker, according to an exemplary embodiment. The device for starting the rice cooker may be applicable in the rice cooker 110 shown in Fig. 1, and may be used to perform the method shown in any one of Figs. 2-4. As shown in Fig. 5, the device for starting the rice cooker includes but not limited to: a first detection module 501, a second detection module 502 and a starting module 503.

The first detection module 501 is configured to detect whether rice and water in the rice cooker meet a cooking condition.

The second detection module 502 is configured to, if the rice and the water in the rice cooker meet the cooking condition, detect whether a specified user operation is received.

The starting module 503 is configured to, if a detection result detected by the second detection module 502 is that the specified user operation is not received, start a cooking function of the rice cooker.

In summary, in the device for starting a rice cooker provided by the embodiments of the present disclosure, whether the rice and the water in the rice cooker meet the cooking condition is detected, and if the rice and the water in the rice cooker meet the cooking condition, then it is detected whether a specified user operation is received, and if the specified user operation is not received, the cooking function of the rice cooker is started. By doing so, that is, when it is detected that the rice and the water in the rice cooker have been ready and a specified operation of the user is not received, the cooking function is started automatically, the problem of failing to cook due to that the user forgot to make a cooking operation or an appointment operation manually is avoided, and user experience is improved.

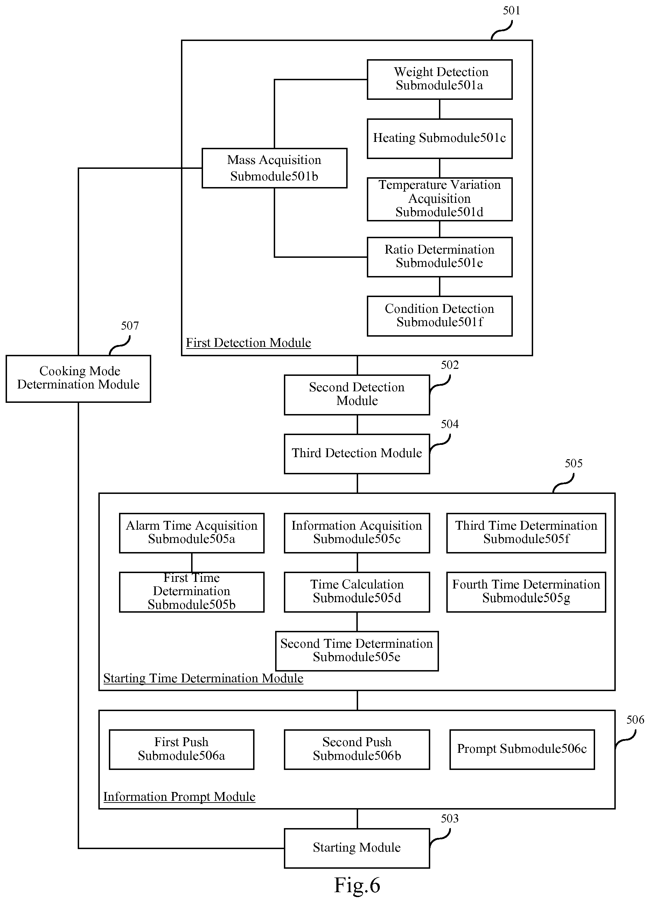

Fig. 6 is a block diagram illustrating a device for starting a rice cooker, according to another exemplary embodiment. The device for starting the rice cooker may be applicable in the rice cooker 110 shown in Fig. 1, and may be used to perform the method shown in any one of Figs. 2-4. As shown in Fig. 5, the device for starting the rice cooker includes, but is not limited to, a first detection module 501, a second detection module 502 and a starting module 503.

The first detection module 501 is configured to detect whether rice and water in the rice cooker meet a cooking condition.

The second detection module 502 is configured to, if the rice and the water in the rice cooker meet the cooking condition, detect whether a specified user operation is received.

The starting module 503 is configured to, if a detection result detected by the second detection module 502 is that the specified user operation is not received, start a cooking function of the rice cooker.

Optionally, the first detection module 501 includes: a weight detection submodule 501a, a mass acquisition submodule 501b, a heating submodule 501c, a temperature variation acquisition submodule 501d, a ratio determination submodule 50le and a condition detection submodule 501f.

The weight detection submodule 501a is configured to detect whether there is weight in the rice cooker via a pressure sensor provided on a bottom of a pan of the rice cooker.

The mass acquisition submodule 501b is configured to, if there is weight in the rice cooker, acquire a total mass of the weight.

The heating submodule 501c configured to heat an inner pot of the rice cooker for a predetermined length of time.

The temperature variation acquisition submodule 501d is configured to acquire a temperature variation value in the inner pot of the rice cooker between the temperature before and after heating.

The ratio determination submodule 501e is configured to determine a ratio of the rice and the water in the rice cooker according to the temperature variation value and the total mass.

The condition detection submodule 501f is configured to detect whether the rice and the water in the rice cooker meet the cooking condition according to the ratio of the rice and the water.

Optionally, the device further includes: a third detection module 504.

The third detection module 504 is configured to detect whether an automatic starting condition is satisfied before the starting module 503 starts the cooking function of the rice cooker, wherein the automatic starting condition includes at least one of the following conditions:

it is decided that a user has entered into a sleep state according to physiological parameters of the user detected by a wearable device;

it is decided that there is no user activity in a room according to monitoring data of a security device in a smart home; and

it is detected that a time that the rice and the water in the rice cooker meet the cooking condition is in a first time interval, and each lighting device in the smart home is in a closed state.

Optionally, the device further includes: a starting time determination module 505.

The starting time determination module 505 is configured to determine a starting time for starting the cooking function of the rice cooker before the starting module 503 starts the cooking function of the rice cooker.

The starting module 503 is configured to the cooking function of the rice cooker when the starting time arrives.

Optionally, the starting time determination module 505 includes: an alarm time acquisition submodule 505a and a first time determination submodule 505b; or the starting time determination module 505 includes: an information acquisition submodule 505c , a time calculation submodule 505d and a second time determination submodule 505e; or the starting time determination module 505 includes: a third time determination submodule 505f; or the starting time determination module 505 includes: a fourth time determination submodule 505g.

The alarm time acquisition submodule 505a is configured to, if it is detected that a time that the rice and the water in the rice cooker meet the cooking condition is in a second time interval, acquire an alarm time set in an alarm device.

The first time determination submodule 505b is configured to determine a starting time according to the alarm time.

The information acquisition submodule 505c is configured to, if it is detected that a time that the rice and the water in the rice cooker meet the cooking condition is in a third time interval, acquire route information between a specified smart device and the rice cooker and road condition information corresponding to the route information.

The time calculation submodule 505d is configured to calculate an arrival time of the specified smart device according to the route information and the road condition information.

The second time determination submodule 505e is configured to determine the starting time according to the arrival time.

The third time determination submodule 505f is configured to determine a time when the user manually started the cooking function of the rice cooker last time as the starting time.

The fourth time determination submodule 505g is configured to use a starting time which is automatically determined last time as the starting time.

Optionally, the device further includes: an information prompt module 506.

The information prompt module 506 is configured to display prompt information before the starting module starts the cooking function of the rice cooker, wherein the prompt information is used to prompt whether an operation of starting the cooking function of the rice cooker is cancelled.

The starting module 503 is configured to, if an instruction for cancelling the operation of starting the cooking function of the rice cooker is not received within a second predetermined period of time, perform the operation of starting the cooking function of the rice cooker.

Optionally, the information prompt module 506 includes: a first push submodule 506a, a second push submodule 506b and a prompt submodule 506c.

The first push submodule 506a is configured to, when it is detected that there is no user activity in a room, push the prompt information to a mobile terminal.

The second push submodule 506b is configured to, when it is detected that there is user activity in the room, push the prompt information to a smart television.

The prompt submodule 506c is configured to, when it is detected that there is user activity in the room, emit a sound-light prompt via the rice cooker.

Optionally, the device further includes: a cooking mode determination module 507.

The cooking mode determination module 507 is configured to determine a cooking mode according to the ratio of the rice and the water before the starting module 503 starts the cooking function of the rice cooker, wherein the cooking mode includes cooking rice or congee.

The starting module 503 is configured to start the cooking function of the rice cooker according to the cooking mode.

In summary, in the device for starting a rice cooker provided by the embodiments of the present disclosure, whether the rice and the water in the rice cooker meet the cooking condition is detected, and if the rice and the water in the rice cooker meet the cooking condition, then it is detected whether a specified user operation is received, and if the specified user operation is not received, the cooking function of the rice cooker is started. By doing so, that is, when it is detected that the rice and the water in the rice cooker have been ready and a specified operation of the user is not received, the cooking function is started automatically, the problem of failing to cook due to that the user forgot to make a cooking operation or an appointment operation manually is avoided, and user experience is improved.

Furthermore, in the device for starting a rice cooker provided by the embodiments of the present disclosure, the cooking mode is decided according to the mass ratio of the rice and the water, and when the starting time arrives, the cooking function of the rice cooker is started according to the determined cooking mode, thereby, the user does not need to set or select manually, and user experience is further improved.

In addition, in the device for starting a rice cooker provided by the embodiments of the present disclosure, before starting the cooking function of the rice cooker, the prompt information used to prompt whether the operation for starting the cooking function of the rice cooker is cancelled is displayed. If the instruction for cancelling the operation of starting the cooking function of the rice cooker is not received within the second predetermined period of time, the cooking function of the rice cooker is started when the starting time arrives, so as to facilitate the user to know a starting state of the rice cooker timely, thus avoiding an error detection.

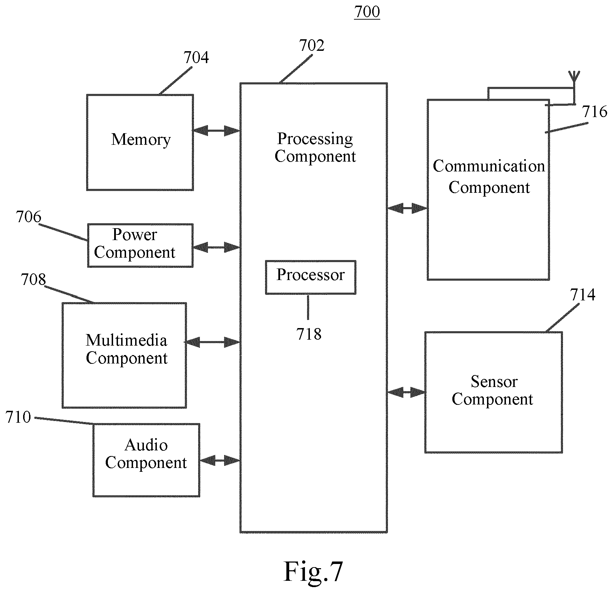

Fig. 7 is a block diagram illustrating a device 700 according to an exemplary embodiment. For example, the device 700 may be a mobile phone, a computer, a digital broadcast terminal, a messaging device, a router device, a gaming console, a tablet, a medical device, exercise equipment, a personal digital assistant, a smart control device, a smart household appliance, a smart wearable device, and the like.

Referring to Fig. 7, the device 700 may include one or more of the following components: a processing component 702, a memory 704, a power component 706, a multimedia component 708, an audio component 710, a sensor component 714, and a communication component 716.

The processing component 702 typically controls overall operations of the device 700, such as the operations associated with display, telephone calls, data communications, camera operations, and recording operations. The processing component 702 may include one or more processors 718 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The memory 704 also stores one or more modules, the one or more modules are configured to be performed by one or more processors 718 to perform all or part of steps of the method shown in any one of the above Figs. 2-4.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The sensor component 714 includes one or more sensors to provide status assessments of various aspects of the device 700. For instance, the sensor component 714 may detect an open/closed status of the device 700, relative positioning of components, a change in position of the device 700 or a component of the device 700, and a change in temperature of the device 700. In some embodiments, the sensor component 714 may further include a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 718 in the device 700, for performing the above-described methods. For example, the non-transitory computer-readable storage medium may be a ROM, a RAM, a CD-ROM, a magnetic tape, a floppy disc, an optical data storage device, and the like.

**Claims**

1. A method for starting a rice cooker, comprising:

    detecting (202, 402) whether rice and water in the rice cooker meet a cooking condition; if the rice and the water in the rice cooker meet the cooking condition, detecting (204, 404) whether a specified user operation is received; and if a detection result is that the specified user operation is not received, starting (206) a cooking function of the rice cooker,
the method **characterised in that** detecting (202) whether rice and water in the rice cooker meet the cooking condition comprises:

    detecting (302) whether there is weight in the rice cooker via a pressure sensor provided on a bottom of a pan of the rice cooker; if there is weight in the rice cooker, acquiring (304) a total mass of the weight; heating (304) an inner pot of the rice cooker for a predetermined length of time; acquiring (304) a temperature variation value in the inner pot of the rice cooker between before and after heating; determining (304) a ratio of the rice and the water in the rice cooker according to the temperature variation value and the total mass; and detecting (306) whether the rice and the water in the rice cooker meet the cooking condition according to the ratio of the rice and the water.

2. The method according to claim 1, wherein before starting (206) the cooking function of the rice cooker, the method further comprises:
detecting (308) whether an automatic starting condition is satisfied, wherein the automatic starting condition comprises at least one of the following conditions:

    it is decided that a user has entered into a sleep state according to physiological parameters of the user detected by a wearable device; it is decided that there is no user activity in a room according to monitoring data of a security device in a smart home; and it is detected that a time that the rice and the water in the rice cooker meet the cooking condition is in a first time interval, and each lighting device in the smart home is in a closed state.

3. The method according to claim 1 or 2, wherein before starting (206) the cooking function of the rice cooker, the method further comprises:

    determining (312, 408) a starting time for starting the cooking function of the rice cooker; the step of starting (206) a cooking function of the rice cooker comprises: when the starting time arrives, starting (314) the cooking function of the rice cooker.

4. The method according to claim 3, wherein the step of determining (312) the starting time for starting the cooking function of the rice cooker comprises:

if it is detected that a time that the rice and the water in the rice cooker meet the cooking condition is in a second time interval, acquiring an alarm time set in an alarm device, and determining a starting time according to the alarm time; if it is detected that a time that the rice and the water in the rice cooker meet the cooking condition is in a third time interval, acquiring route information between a specified smart device and the rice cooker and road condition information corresponding to the route information, calculating an arrival time of the specified smart device according to the route information and the road condition information, and determining the starting time according to the arrival time; determining a time when the user manually started the cooking function of the rice cooker last time as the starting time; or using a starting time which is automatically determined last time as the starting time.

5. The method according to any of the preceding claims, further comprising:

before starting (206) the cooking function of the rice cooker, displaying (410) prompting information to prompt whether an operation of starting the cooking function of the rice cooker is cancelled; and if an instruction for cancelling the operation of starting the cooking function of the rice cooker is not received within a second predetermined period of time, performing (412) the operation of starting the cooking function of the rice cooker.

6. The method according to claim 5, wherein the step of displaying prompting information comprises:

when it is detected that there is no user activity in a room, pushing the prompting information to a mobile terminal; when it is detected that there is user activity in the room, pushing the prompting information to a smart television; or when it is detected that there is user activity in the room, emitting a sound-light prompt via the rice cooker.

7. A device for starting a rice cooker, comprising:

a first detection module (501) configured to detect whether rice and water in the rice cooker meet a cooking condition; a second detection module (502) configured to, if the rice and the water in the rice cooker meet the cooking condition, detect whether a specified user operation is received; and

a starting module (503) configured to, if a detection result detected by the second detection module (502) is that the specified user operation is not received, start a cooking function of the rice cooker, the device **characterised in that** the first detection module (501) comprises:

a weight detection submodule (501a) configured to detect whether there is weight in the rice cooker via a pressure sensor provided on a bottom of a pan of the rice cooker; a mass acquisition submodule (501b) configured to, if there is weight in the rice cooker, acquire a total mass of the weight; a heating submodule (501c) configured to heat an inner pot of the rice cooker for a predetermined length of time; a temperature variation acquisition submodule (501d) configured to acquire the temperature variation value in the inner pot of the rice cooker between before and after heating; a ratio determination submodule (501e) configured to determine a ratio of the rice and the water in the rice cooker according to the temperature variation value and the total mass; and a condition detection submodule (501f) configured to detect whether the rice and the water in the rice cooker meet the cooking condition according to the ratio of the rice and the water.

8. The device according to claim 7, further comprising: a third detection module (504) configured to detect whether an automatic starting condition is satisfied before the starting module (503) starts the cooking function of the rice cooker, wherein the automatic starting condition comprises at least one of the following conditions:

it is decided that a user has entered into a sleep state according to physiological parameters of the user detected by a wearable device; it is decided that there is no user activity in a room according to monitoring data of a security device in a smart home; and it is detected that a time that the rice and the water in the rice cooker meet the cooking condition is in a first time interval, and each lighting device in the smart home is in a closed state.

9. The device according to claim 7 or 8, further comprising:

a starting time determination module (505) configured to determine a starting time for starting the cooking function of the rice cooker before the starting module (503) starts the cooking function of the rice cooker;

wherein the starting module (503) starts the cooking function of the rice cooker when the starting time arrives.

10. The device according to claim 9, wherein the starting time determination module (505) comprises: an alarm time acquisition submodule (505a) and a first time determination submodule (505b); or the starting time determination module (505) comprises: an information acquisition submodule (505c), a time calculation submodule (505d) and a second time determination submodule (505e); or the starting time determination module (505) comprises: a third time determination submodule (505f); or the starting time determination module (505) comprises: a fourth time determination submodule (505g); wherein,

the alarm time acquisition submodule (505a) is configured to, if it is detected that a time that the rice and the water in the rice cooker meet the cooking condition is in a second time interval, acquire an alarm time set in an alarm device;

the first time determination submodule (505b) is configured to determine a starting time according to the alarm time;

the information acquisition submodule (505c) is configured to, if it is detected that a time that the rice and the water in the rice cooker meet the cooking condition is in a third time interval, acquire route information between a specified smart device and the rice cooker and road condition information corresponding to the route information;

the time calculation submodule (505d) is configured to calculate an arrival time of the specified smart device according to the route information and the road condition information;

the second time determination submodule (505e) is configured to determine the starting time according to the arrival time;

the third time determination submodule (505f) is configured to determine a time when the user manually started the cooking function of the rice cooker last time as the starting time; and

the fourth time determination submodule (505g) is configured to use a starting time which is automatically determined last time as the starting time.

11. The device according to any of claims 7 to 10, further comprising:

an information prompting module (506) configured to display prompting information before the starting module (503) starts the cooking function of the rice cooker, wherein the prompting information is used to prompt whether an operation of starting the cooking function of the rice cooker is cancelled;

wherein the starting module (503) is configured to, if an instruction for cancelling the operation of starting the cooking function of the rice cooker is not received within a second predetermined period of time, perform the operation of starting the cooking function of the rice cooker.

12. The device according to claim 11, wherein the information prompt module (506) comprises:

a first push submodule (506a) configured to, when it is detected that there is no user activity in a room, push the prompt information to a mobile terminal;

a second push submodule (506b) configured to, when it is detected that there is user activity in the room, push the prompt information to a smart television; and

a prompt submodule (506c) configured to, when it is detected that there is user activity in the room, emit a sound-light prompt via the rice cooker.

13. A computer program, which when executing on a processor (718) of a device, performs a method according to any one of claims 1 to 6.

**Patentansprüche**

1. Verfahren zum Starten eines Reiskochers, das Folgendes beinhaltet:

Erkennen (202, 402), ob Reis und Wasser im Reiskocher eine Kochbedingung erfüllen;
Erkennen (204, 404), wenn Reis und Wasser im Reiskocher die Kochbedingung erfüllen, ob eine vorgegebene Benutzeroperation empfangen wird; und
Starten (206) einer Kochfunktion des Reiskochers, wenn ein Erkennungsergebnis das ist, dass keine vorgegebene Benutzeroperation empfangen wird,
wobei das Verfahren **dadurch gekennzeichnet ist, dass** das Erkennen (202), ob Reis und Wasser im Reiskocher die Kochbedingung erfüllen, Folgendes beinhaltet:

Erkennen (302), ob Gewicht im Reiskocher vorhanden ist, über einen an einem Boden einer Pfanne des Reiskochers vorgesehenen Drucksensor;
Erfassen (304) einer Gesamtmasse des Gewichts, wenn Gewicht im Reiskocher vorhanden ist;
Erhitzen (304) eines Innentopfs des Reiskochers für eine vorbestimmte Zeitdauer;

Erfassen (304) eines Temperaturvariationswertes im Innentopf des Reiskochers zwischen vor und nach dem Erhitzen;
Bestimmen (304) eines Verhältnisses zwischen Reis und Wasser im Reiskocher anhand des Temperaturvariationswertes und der Gesamtmasse; und
Erkennen (306), ob Reis und Wasser im Reiskocher die Kochbedingung erfüllen, anhand des Verhältnisses zwischen Reis und Wasser.

2. Verfahren nach Anspruch 1, wobei das Verfahren vor dem Starten (206) der Kochfunktion des Reiskochers ferner Folgendes beinhaltet:
Erkennen (308), ob eine Automatikstartbedingung erfüllt ist, wobei die Automatikstartbedingung wenigstens eine der folgenden Bedingungen beinhaltet:

es wird anhand von durch ein tragbares Gerät erkannten physiologischen Parametern des Benutzers entschieden, dass ein Benutzer in einen Schlummerzustand eingetreten ist;
es wird anhand von Überwachungsdaten eines Sicherheitsgeräts in einem Smart-Home entschieden, dass es keine Benutzeraktivität in einem Raum gibt; und
es wird erkannt, dass eine Zeit, in der Reis und Wasser im Reiskocher die Kochbedingung erfüllen, in einem ersten Zeitintervall liegt und jedes Beleuchtungsgerät in dem Smart-Home in einem geschlossenen Zustand ist.

3. Verfahren nach Anspruch 1 oder 2, wobei das Verfahren vor dem Starten (206) der Kochfunktion des Reiskochers ferner Folgendes beinhaltet:

Bestimmen (312, 408) einer Startzeit zum Starten der Kochfunktion des Reiskochers;
der Schritt des Startens (206) einer Kochfunktion des Reiskochers Folgendes beinhaltet:
Starten (314) der Kochfunktion des Reiskochers, wenn die Startzeit erreicht ist.

4. Verfahren nach Anspruch 3, wobei der Schritt des Bestimmens (312) der Startzeit zum Starten der Kochfunktion des Reiskochers Folgendes beinhaltet:

Erfassen, wenn erkannt wird, dass eine Zeit, zu der Reis und Wasser im Reiskocher die Kochbedingung erfüllen, in einem zweiten Zeitintervall liegt, einer in einem Alarmgerät eingestellten Alarmzeit, und Bestimmen einer Startzeit anhand der Alarmzeit;
Erfassen, wenn erkannt wird, dass eine Zeit, zu der Reis und Wasser im Reiskocher die Kochbedingung erfüllen, in einem dritten Zeitintervall liegt, von Routeninformationen zwischen einem vorgegebenen Smart-Gerät und dem Reiskocher und von Straßenzustandsinformationen anhand der Routeninformationen, Berechnen einer Ankunftszeit des vorgegebenen Smart-Geräts anhand der Routeninformationen und der Straßenzustandsinformationen, und Bestimmen der Startzeit anhand der Ankunftszeit;
Bestimmen einer Zeit, zu der der Benutzer die Kochfunktion des Reiskochers das letzte Mal manuell gestartet hat, als die Startzeit; oder
Benutzen der Startzeit, die automatisch das letzte Mal bestimmt wurde, als die Startzeit.

5. Verfahren nach einem der vorherigen Ansprüche, das ferner Folgendes beinhaltet:

Anzeigen (410), vor dem Starten (206) der Kochfunktion des Reiskochers, von Abfrageinformationen, um abzufragen, ob ein Vorgang des Startens der Kochfunktion des Reiskochers abgebrochen wird; und
Durchführen (412) des Vorgangs des Startens der Kochfunktion des Reiskochers, wenn nicht innerhalb einer zweiten vorbestimmten Zeitperiode ein Befehl zum Abbrechen des Vorgangs des Startens der Kochfunktion des Reiskochers empfangen wird.

6. Verfahren nach Anspruch 5, wobei der Schritt des Anzeigens von Abfrageinformationen Folgendes beinhaltet:

Pushen der Abfrageinformationen auf ein mobiles Endgerät, wenn erkannt wird, dass es in einem Raum keine Benutzeraktivität gibt;
Pushen der Abfrageinformationen auf einen Smart-Fernseher, wenn erkannt wird, dass es in dem Raum Benutzeraktivität gibt; oder
Emittieren einer Ton-Licht-Abfrage über den Reiskocher, wenn erkannt wird, dass es in dem Raum Benutzeraktivität gibt.

7. Gerät zum Starten eines Reiskochers, das Folgendes umfasst:

ein erstes Erkennungsmodul (501), konfiguriert zum Erkennen, ob Reis und Wasser im Reiskocher eine Kochbedingung erfüllen;
ein zweites Erkennungsmodul (502), konfiguriert zum Erkennen, wenn Reis und Wasser im Reiskocher die Kochbedingung erfüllen, ob eine vorgegebene Benutzeroperation empfangen wird; und
ein Startmodul (503), konfiguriert zum Starten einer Kochfunktion des Reiskochers, wenn ein vom zweiten Erkennungsmodul (502) erkanntes Erkennungsergebnis das ist, dass die vorgegebene Benutzeroperation nicht empfangen wird, wobei das Gerät **dadurch gekennzeichnet ist, dass** das erste Erkennungsmodul (501) Folgendes umfasst:

ein Gewichtserkennungssubmodul (501a), konfiguriert zum
Erkennen, ob im Reiskocher Gewicht vorhanden ist, über einen an einem Boden einer Pfanne des Reiskochers vorgesehenen Drucksensor;
ein Massenerfassungssubmodul (501b), konfiguriert zum Erfassen einer Gesamtmasse des Gewichts, wenn Gewicht im Reiskocher vorhanden ist;
ein Erhitzungssubmodul (501c), konfiguriert zum Erhitzen eines Innentopfs des Reiskochers für eine vorbestimmte Zeitdauer;
ein Temperaturvariationserfassungssubmodul (501d), konfiguriert zum Erfassen des Temperaturvariationswertes im Innentopf des Reiskochers zwischen vor und nach dem Erhitzen;
ein Verhältnisbestimmungssubmodul (501e), konfiguriert zum Bestimmen eines Verhältnisses zwischen Reis und Wasser im Reiskocher anhand des Temperaturvariationswertes und der Gesamtmasse; und
ein Bedingungserkennungssubmodul (501f), konfiguriert zum Erkennen, ob Reis und Wasser im Reiskocher die Kochbedingung erfüllen, anhand des Verhältnisses zwischen Reis und Wasser.

8. Gerät nach Anspruch 7, das ferner Folgendes umfasst:
ein drittes Erkennungsmodul (504), konfiguriert zum Erkennen, ob eine Automatikstartbedingung erfüllt ist, bevor das Startmodul (503) die Kochfunktion des Reiskochers startet, wobei die Automatikstartbedingung wenigstens eine der folgenden Bedingungen beinhaltet:

es wird anhand von durch ein tragbares Gerät erkannten physiologischen Parametern des Benutzers entschieden, dass ein Benutzer in einen Schlummerzustand eingetreten ist;
es wird anhand von Überwachungsdaten eines Sicherheitsgeräts in einem Smart-Home entschieden, dass es keine Benutzeraktivität in einem Raum gibt; und
es wird erkannt, dass eine Zeit, in der Reis und Wasser im Reiskocher die Kochbedingung erfüllen, in einem ersten Zeitintervall liegt und jedes Beleuchtungsgerät in dem Smart-Home in einem geschlossenen Zustand ist.

9. Gerät nach Anspruch 7 oder 8, das ferner Folgendes umfasst:

ein Startzeitbestimmungsmodul (505), konfiguriert zum Bestimmen einer Startzeit zum Starten der Kochfunktion des Reiskochers, bevor das Startmodul (503) die Kochfunktion des Reiskochers startet;
wobei das Startmodul (503) die Kochfunktion des Reiskochers startet, wenn die Startzeit erreicht ist.

10. Gerät nach Anspruch 9, wobei der Startzeitbestimmungsmodul (505) Folgendes umfasst: ein Alarmzeiterfassungssubmodul (505a) und ein erstes Zeitbestimmungssubmodul (505b); oder das Startzeitbestimmungsmodul (505) Folgendes umfasst: ein Informationserfassungssubmodul (505c), ein Zeitberechnungssubmodul (505d) und ein zweites Zeitbestimmungssubmodul (505e); oder das Startzeitbestimmungsmodul (505) Folgendes umfasst: ein drittes Zeitbestimmungssubmodul (505f); oder das Startzeitbestimmungsmodul (505) Folgendes umfasst: ein viertes Zeitbestimmungssubmodul (505g); wobei

das Alarmzeiterfassungssubmodul (505a) konfiguriert ist zum Erfassen einer in einem Alarmgerät eingestellten Alarmzeit, wenn erkannt wird, dass eine Zeit, zu der Reis und Wasser im Reiskocher die Kochbedingung erfüllen, in einem zweiten Zeitintervall liegt;
das erste Zeitbestimmungssubmodul (505b) zum Bestimmen einer Startzeit anhand der Alarmzeit konfiguriert ist;
das Informationserfassungssubmodul (505c) konfiguriert ist zum Erfassen, wenn erkannt wird, dass eine Zeit, zu der Reis und Wasser im Reiskocher die Kochbedingung erfüllen, in einem dritten Zeitintervall liegt, von Routeninformationen zwischen einem vorgegebenen Smart-Gerät und dem Reiskocher und Straßenzustandsinformationen entsprechend den Routeninformationen;
das Zeitberechnungssubmodul (505d) zum Berechnen einer Ankunftszeit des vorgegebenen Smart-Geräts anhand der Routeninformationen und den Straßenzustandsinformationen konfiguriert ist;
das zweite Zeitbestimmungssubmodul (505e) zum Bestimmen der Startzeit anhand der Ankunftszeit konfiguriert ist;
das dritte Zeitbestimmungssubmodul (505f) zum Bestimmen einer Zeit, zu der der Benutzer die Kochfunktion des Reiskochers das letzte Mal manuell gestartet hat, als die Startzeit konfiguriert ist; und
das vierte Zeitbestimmungssubmodul (505g) zum Benutzen einer Startzeit, die das letzte Mal automatisch bestimmt wird, als die Startzeit konfiguriert ist.

11. Gerät nach einem der Ansprüche 7 bis 10, das ferner Folgendes umfasst:

ein Informationsabfragemodul (506), konfiguriert zum Anzeigen von Abfrageinformationen, bevor das Startmodul (503) die Kochfunktion des Reiskochers startet, wobei die Abfrageinformationen zum Abfragen benutzt werden, ob ein Vorgang des Startens der Kochfunktion des Reiskochers abgebrochen wird;

wobei das Startmodul (503) zum Durchführen des Vorgangs des Startens der Kochfunktion des Reiskochers konfiguriert ist, wenn ein Befehl zum Abbrechen des Vorgangs des Startens der Kochfunktion des Reiskochers nicht innerhalb einer zweiten vorbestimmten Zeitperiode empfangen wird.

12. Gerät nach Anspruch 11, wobei das Informationsabfragemodul (506) Folgendes umfasst:

ein erstes Push-Submodul (506a), konfiguriert zum Pushen der Abfrageinformationen auf ein mobiles Endgerät, wenn erkannt wird, dass es in einem Raum keine Benutzeraktivität gibt;

ein zweites Push-Submodul (506b), konfiguriert zum Pushen der Abfrageinformationen auf einen Smart-Fernseher, wenn erkannt wird, dass es in dem Raum Benutzeraktivität gibt; und

ein Abfragesubmodul (506c), konfiguriert zum Aussenden einer Ton-Licht-Abfrage über den Reiskocher, wenn erkannt wird, dass es in dem Raum Benutzeraktivität gibt.

13. Computerprogramm, das bei Ausführung auf einem Prozessor (718) eines Geräts ein Verfahren nach einem der Ansprüche 1 bis 6 durchführt.

## Revendications

1. Procédé de démarrage d'un cuiseur de riz, comprenant :

la détection (202, 402) que le riz et l'eau dans le cuiseur de riz satisfont ou non un critère de cuisson ;

si le riz et l'eau dans le cuiseur de riz satisfont le critère de cuisson, la détection (204, 404) qu'une opération d'utilisateur spécifiée est reçue ou non ; et

si un résultat de la détection est que l'opération d'utilisateur spécifiée n'est pas reçue, le démarrage (206) d'une fonction de cuisson du cuiseur de riz,

le procédé étant **caractérisé en ce que** la détection (202) que le riz et l'eau dans le cuiseur de riz satisfont ou non le critère de cuisson comprend :

la détection (302) qu'un poids se trouve ou non dans le cuiseur de riz par l'intermédiaire d'un capteur de pression placé sur un fond d'une poêle du cuiseur de riz ;

si un poids se trouve dans le cuiseur de riz, l'acquisition (304) d'une masse totale du poids ;

la chauffe (304) d'un pot interne du cuiseur de riz pendant une durée prédéterminée ;

l'acquisition (304) d'une valeur de variation de température dans le pot interne du cuiseur de riz entre le début et la fin du chauffage ;

la détermination (304) d'un rapport du riz et de l'eau dans le cuiseur de riz conformément à la valeur de variation de température et à la masse totale ; et

la détection (306) que le riz et l'eau dans le cuiseur de riz satisfont ou non le critère de cuisson conformément au rapport du riz et de l'eau.

2. Procédé selon la revendication 1, le procédé comprenant en outre, avant le démarrage (206) de la fonction de cuisson du cuiseur de riz :
la détection (308) qu'une condition de démarrage automatique est satisfaite ou non, la condition de démarrage automatique comprenant au moins une des conditions suivantes :

il est décidé qu'un utilisateur est entré dans un état inactif conformément à des paramètres physiologiques de l'utilisateur détectés par un dispositif connecté ;

il est décidé qu'il n'existe aucune activité d'utilisateur dans une pièce conformément à la surveillance de données d'un dispositif de sécurité dans une maison intelligente ;

il est détecté qu'une heure à laquelle le riz et l'eau dans le cuiseur de riz satisfont le critère de cuisson est comprise dans un premier intervalle de temps, et que chaque dispositif d'éclairage dans la maison intelligente est éteint.

3. Procédé selon la revendication 1 ou 2, le procédé comprenant en outre, avant le démarrage (206) de la fonction de cuisson du cuiseur de riz :

la détermination (312, 408) d'une heure de démarrage pour démarrer la fonction de cuisson du cuiseur de riz ;

l'étape de démarrage (206) d'une fonction de cuisson du cuiseur de riz comprend :

quand l'heure de démarrage arrive, le démarrage (314) de la fonction de cuisson du cuiseur de riz.

4. Procédé selon la revendication 3, dans lequel l'étape de détermination (312) de l'heure de démarrage pour démarrer la fonction de cuisson du cuiseur de riz comprend :

s'il est détecté qu'une heure à laquelle le riz et l'eau dans le cuiseur de riz satisfont le critère de cuisson est comprise dans un deuxième intervalle de temps, l'acquisition d'une heure d'alarme réglée dans un dispositif d'alarme, et la détermination d'une heure de démarrage conformément à l'heure d'alarme ;

s'il est détecté qu'une heure à laquelle le riz et l'eau dans le cuiseur de riz satisfont le critère de cuisson est comprise dans un troisième intervalle de temps, l'acquisition d'informations de route entre un dispositif intelligent spécifié et le cuiseur de riz et d'informations d'état de la circulation correspondant aux informations de route, le calcul d'une heure d'arrivée du dispositif intelligent spécifié conformément aux informations de route et aux informations d'état de la circulation, le calcul d'une heure d'arrivée du dispositif intelligent spécifié conformément aux informations de route et aux informations d'état de la circulation, et la détermination de l'heure de démarrage conformément à l'heure d'arrivée ;

la détermination d'une heure à laquelle l'utilisateur a démarré manuellement la fonction de cuisson du cuiseur de riz la dernière fois comme heure de démarrage ; ou

l'utilisation d'une heure de démarrage qui est déterminée automatiquement la dernière fois comme heure de démarrage.

5. Procédé selon l'une quelconque des revendications précédentes, comprenant en outre :

avant le démarrage (206) de la fonction de cuisson du cuiseur de riz, l'affichage (410) d'informations demandant si une opération de démarrage de la fonction de cuisson du cuiseur de riz est annulée ou non ; et

si une instruction d'annuler l'opération de démarrage de la fonction de cuisson du cuiseur de riz n'est pas reçue durant une seconde période de temps prédéterminée, l'exécution (412) de l'opération de démarrage de la fonction de cuisson du cuiseur de riz.

6. Procédé selon la revendication 5, dans lequel l'étape d'affichage d'informations de demande comprend :

quand aucune activité d'utilisateur n'est détectée dans une pièce, l'envoi des informations de demande à un terminal mobile ;

quand une activité d'utilisateur est détectée dans la pièce, l'envoi des informations de demande à un téléviseur intelligent ; ou

quand une activité d'utilisateur est détectée dans la pièce, l'émission d'une demande sonore-lumineuse par l'intermédiaire du cuiseur de riz.

7. Dispositif de démarrage d'un cuiseur de riz, comprenant :

un premier module de détection (501) configuré pour détecter que le riz et l'eau dans le cuiseur de riz satisfont ou non un critère de cuisson de riz ;

un deuxième module de détection (502) configuré pour, si le riz et l'eau dans le cuiseur de riz satisfont le critère de cuisson, détecter qu'une opération d'utilisateur spécifiée est reçue ou non ; et

un module de démarrage (503) configuré pour, si un résultat de détection détecté par le deuxième module de détection (502) est que l'opération d'utilisateur spécifiée n'est pas reçue, démarrer une fonction de cuisson du cuiseur de riz, le dispositif étant **caractérisé en ce que** le premier module de détection (501) comprend :

un sous-module de détection de poids (501a) configuré pour détecter qu'un poids se trouve ou non dans le cuiseur de riz par l'intermédiaire d'un capteur de pression fourni sur un fond d'une poêle du cuiseur de riz ;

un sous-module d'acquisition de masse (501b) configuré pour, si un poids se trouve dans le cuiseur de riz, acquérir une masse totale du poids ;

un sous-module de chauffe (501c) configuré pour chauffer un pot interne du cuiseur de riz pendant une durée prédéterminée ;

un sous-module d'acquisition de variation de température (501d) configuré pour acquérir la valeur de variation de température dans le pot interne du cuiseur de riz entre le début et la fin de la chauffe ;

un sous-module de détermination de rapport (501e) configuré pour déterminer un rapport du riz et de l'eau se trouvant dans le cuiseur de riz conformément à la valeur de variation de température et à la masse totale ; et

un sous-module de détection de condition (501f) configuré pour détecter que le riz et l'eau dans le cuiseur de riz satisfont ou non le critère de cuisson conformément au rapport du riz et de l'eau.

8. Dispositif selon la revendication 7, comprenant en outre :

un troisième module de détection (504) configuré pour détecter qu'une condition de démarrage automatique est satisfaite ou non avant que le module de démarrage (503) démarre la fonction de cuisson du cuiseur de riz, la condition de démarrage automatique comprenant au moins une des conditions suivantes :

il est décidé qu'un utilisateur est entré dans un état inactif conformément à des paramètres physiologiques de l'utilisateur détectés par un dispositif connecté ;
il est décidé qu'il n'existe aucune activité d'utilisateur dans une pièce conformément à la surveillance de données d'un dispositif de sécurité dans une maison intelligente ;
il est détecté qu'une heure à laquelle le riz et l'eau dans le cuiseur de riz satisfont le critère de cuisson est comprise dans un premier intervalle de temps, et que chaque dispositif d'éclairage dans la maison intelligente est éteint.

9. Dispositif selon la revendication 7 or 8, comprenant en outre :

un module de détermination d'heure de démarrage (505) configuré pour déterminer une heure de démarrage pour démarrer la fonction de cuisson du cuiseur de riz avant que le module de démarrage (503) démarre la fonction de cuisson du cuiseur de riz ;
dans lequel le module de démarrage (503) démarre la fonction de cuisson du cuiseur de riz quand l'heure de démarrage arrive.

10. Dispositif selon la revendication 9, dans lequel le module de détermination d'heure de démarrage (505) comprend : un sous-module d'acquisition d'heure d'alarme (505a) et un premier sous-module de détermination d'heure (505b) ; ou le module de détermination d'heure de démarrage (505) comprend : un sous-module d'acquisition d'informations (505c), un sous-module de calcul de temps (505d) et un second sous-module de détermination d'heure (505e) ; ou le module de détermination d'heure de démarrage (505) comprend : un troisième sous-module de détermination d'heure (505f) ; ou le module de détermination d'heure de démarrage (505) comprend : un quatrième sous-module de détermination d'heure (505g); dans lequel,
le sous-module d'acquisition d'heure d'alarme (505a) est configuré pour, s'il est détecté qu'une heure à laquelle le riz et l'eau dans le cuiseur de riz satisfont le critère de cuisson est comprise dans un deuxième intervalle de temps, acquérir une heure d'alarme réglée dans un dispositif d'alarme ;
le premier sous-module de détermination d'heure (505b) est configuré pour déterminer une heure de démarrage conformément à l'heure d'alarme ;
le sous-module d'acquisition d'informations (505c) est configuré pour, s'il est détecté qu'une heure à laquelle le riz et l'eau dans le cuiseur de riz satisfont le critère de cuisson est comprise dans un troisième intervalle de temps, acquérir des informations de route entre un dispositif intelligent spécifié et le cuiseur de riz et des informations d'état de la circulation correspondant aux informations de route ;
le sous-module de calcul de temps (505d) est configuré pour calculer une heure d'arrivée du dispositif intelligent spécifié conformément aux informations de route et aux informations d'état de la circulation ;
le second sous-module de détermination d'heure (505e) est configuré pour déterminer l'heure de démarrage conformément à l'heure d'arrivée ;
le troisième sous-module de détermination d'heure (505f) est configuré pour déterminer une heure à laquelle l'utilisateur a démarré manuellement la fonction de cuisson du cuiseur de riz la dernière fois comme heures de démarrage ;et
le quatrième sous-module de détermination d'heure (505g) est configuré pour utiliser une heure de démarrage qui est déterminé automatiquement la dernière fois comme l'heure de démarrage.

11. Dispositif selon l'une quelconque des revendications 7 à 10, comprenant en outre :

un module de demande d'informations (506) configuré pour afficher des informations de demande avant que le module de démarrage (503) démarre la fonction de cuisson du cuiseur de riz, les informations de demande étant utilisées pour demander si une opération de démarrage de la fonction de cuisson du cuiseur de riz est annulée ou non ;
dans lequel le module de démarrage (503) est configuré pour, si une instruction d'annuler l'opération de démarrage de la fonction de cuisson du cuiseur de riz n'est pas reçue dans une seconde période de temps prédéterminé, exécuter l'opération de démarrage de la fonction de cuisson du cuiseur de riz.

12. Dispositif selon la revendication 11, dans lequel le module de demande d'informations (506) comprend :

un premier sous-module d'envoi (506a) configuré pour, quand aucune activité d'utilisateur n'est détectée dans une pièce, envoyer les informations de demande à un terminal mobile ;
un second sous-module d'envoi (506b) configuré pour, quand une activité d'utilisateur est détectée dans la pièce, envoyer les informations de demande à un téléviseur ; et
un sous-module de demande (506c) configuré pour, quand une activité d'utilisateur est détectée dans la pièce, émettre une demande sonore-lumineuse par l'intermédiaire du cuiseur de riz.

13. Programme informatique, lequel, à son exécution sur un processeur (718) d'un dispositif, met en œuvre un procédé selon l'une quelconque des revendications 1 à 6.

Fig.1

It is detected whether rice and water in the rice cooker meet a cooking condition
↓
If the rice and the water in the rice cooker meet the cooking condition, it is detected whether a specified user operation is received
↓
If a detection result is that the specified user operation is not received, a cooking function of the rice cooker is started

Fig.2

It is detected whether there are weights in the rice cooker via a pressure sensor provided on a bottom of a pan of the rice cooker

302

If there are weights in the rice cooker, then a total mass of the weights is acquired; an inner pot of the rice cooker is heated for a predetermined length of time; a temperature variation value in the inner pot of the rice cooker is acquired before or after heating; and a ratio of the rice and the water in the rice cooker is determined according to the temperature variation value and the total mass

304

It is detected whether the rice and the water in the rice cooker meet the cooking condition according to the ratio of the rice and the water

306

If the rice and the water in the rice cooker meet the cooking condition, it is detected whether a specified user operation is received

308

If the specified user operation is not received, it is detected whether an automatic starting condition is satisfied

310

If the automatic starting condition is satisfied, a starting time for starting the cooking function of the rice cooker is determined

312

When the starting time arrives, the cooking function of the rice cooker is started

314

## Fig.3

It is detected whether rice and water in the rice cooker meet a cooking condition

402

If the rice and the water in the rice cooker meet the cooking condition, it is detected whether a specified user operation is received

404

If the specified user operation is not received, it is detected whether an automatic starting condition is satisfied

406

If the automatic starting condition is satisfied, a starting time for starting the cooking function of the rice cooker is determined

408

Prompt information is displayed to prompt whether an operation of starting the cooking function of the rice cooker is cancelled

410

If an instruction for cancelling the operation of starting the cooking function of the rice cooker is not received within a second predetermined period of time, the cooking function of the rice cooker is started when the starting time arrives

412

## Fig.4

501

First Detection
Module

502

Second Detection
Module

503

Starting Module

# Fig.5

501

Weight Detection
Submodule501a

Heating Submodule501c

Mass Acquisition
Submodule501b

Temperature Variation
Acquisition
Submodule501d

Ratio Determination
Submodule501e

507

Condition Detection
Submodule501f

Cooking Mode
Determination Module

First Detection Module

502

Second Detection
Module

504

Third Detection Module

505

Alarm Time Acquisition
Submodule505a

Information Acquisition
Submodule505c

Third Time Determination
Submodule505f

First Time
Determination
Submodule505b

Time Calculation
Submodule505d

Fourth Time Determination
Submodule505g

Second Time Determination
Submodule505e

Starting Time Determination Module

506

First Push
Submodule506a

Second Push
Submodule506b

Prompt Submodule506c

Information Prompt Module

503

Starting Module

Fig.6

Fig.7

**EP 3 091 694 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101400108 B1
- JP 2005342075 A

- EP 2540199 A1